# EUROPÄISCHE PATENTSCHRIFT

(11) **EP 1 619 075 B1**
(45) Veröffentlichungstag und Bekanntmachung des Hinweises auf die Patenterteilung: **04.04.2007**
(21) Anmeldenummer: 05014237.1
(22) Anmeldetag: 30.06.2005
(51) Int. Cl.: B60R 1/06, B60R 1/12

(54) **Beheizbarer Aussenspiegel, insbesondere beheizbarer Rückspiegel für KFZ, sowie Spiegelscheibe hierfür**
Heatable rear view mirror for a vehicle and a mirror therefor
Reéroviseur chauffant pour automobil et miroir associé

(30) Priorität: 20.07.2004 DE 102004035022
(43) Veröffentlichungstag der Anmeldung: 25.01.2006
(73) Patentinhaber: MEKRA Lang GmbH & Co. KG, 90765 Fürth (DE)
(72) Erfinder: Witzke, Michael, 91522 Ansbach (DE); Scholler, Jörg, 91465 Ergersheim (DE); Lang, Heinrich, 91465 Ergersheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- DE-A1- 19 921 880
- DE-A1- 19 922 778
- US-A1- 2004 079 743
- US-B1- 6 426 485

## Beschreibung

Die Erfindung betrifft einen beheizbaren Außenspiegel, insbesondere einen beheizbaren Rückspiegel für Kfz nach dem Oberbegriff des Anspruches 1 sowie eine Spiegelscheibe hierfür nach dem Oberbegriff des Anspruch 7.

Es ist bekannt, Außenrückspiegel für Kraftfahrzeuge beheizbar zu gestalten, so daß Kondensat, Reif, Schnee, Eis oder dergleichen durch Erwärmung der Spiegelscheibe mittels eines Heizelementes entfernt werden können, um über den Spiegel wieder ein ungehindertes Sichtfeld nach hinten zu haben. Die Heizelemente werden hierbei in aller Regel in Form von Flächenheizelementen ausgebildet, welche sich im wesentlichen vollflächig über die Ausdehnung der Spiegelscheibe hinweg an deren Rückseite erstrecken. Weiterhin ist es bekannt, in beheizbaren Rückspiegeln das Heizelement über einen Thermoschalter zu aktivieren, d.h. quasi automatisch ab einer bestimmten Außentemperatur schließt der Thermoschaltern den Stromkreislauf zu dem Heizelement, so daß dieses aktiviert wird.

Da somit das Ein- und Ausschalten der Spiegelheizung oder des Heizelementes über den Thermoschalter automatisch erfolgt, hat der Fahrer eines mit einem oder mehreren dieser Spiegel ausgestatten Fahrzeuges Schwierigkeiten, zu erkennen, ob sich die Spiegelheizung bereits selbstätig eingeschaltet hat oder nicht. Oftmals ist es nämlich so, daß die Spiegelscheibe beispielsweise durch Beschlag oder dergleichen "blind" ist, sich der Thermoschalter jedoch (noch) nicht eingeschaltet hat, da beispielsweise die Temperatur hierzu noch nicht niedrig genug ist, oder aber der Thermoschalter hat unmittelbar vor Überprüfung der Spiegelsichtverhältnisse eingeschaltet, es ist aber in der kurzen Zeit seit dem Einschaltmoment noch kein Ergebnis sichtbar, da die Spiegelscheibe noch nicht ausreichend erwärmt werden konnte. In solchen Fällen wird die Spiegelheizung dann zumeist vom Fahrer manuell eingeschaltet, aber diese zusätzliche Manipulation seitens des Fahrers ist oftmals unnötig, nämlich immer dann, wenn sich der Thermoschalter erst unmittelbar vor Überprüfung der Spiegelsichtverhältnisse eingeschaltet hat, aber noch kein Ergebnis sichtbar ist, da die Spiegelscheibe noch nicht ausreichend erwärmt werden konnte. Für den Fahrer eines Kraftfahrzeugs, welches mit einem oder mehreren beheizbaren Rückspiegeln ausgestattet ist, ist es daher wünschenswert zu wissen, ob sich bei beschlagenem oder "blinden" Spiegel die automatische Spiegelheizung zur Beseitigung dieses Beschlags bereits eingeschaltet hat oder nicht, um notfalls über einen separaten Schalter das Heizelement unter Überbrückung des Thermoschalters einschalten zu können.

Insbesondere bei Nutzfahrzeugen ist es auch üblich, dass die Spiegelheizung lediglich von Hand aktivier- und deaktivierbar ist. Um eine Überhitzung der Spiegelfläche und eine hierdurch verursachte Beschädigung des Spiegels oder Verletzungen von Personen zu vermeiden, die den überhitzten Spiegel berühren, ist es bekannt optische Heizungsindikatoren vorzusehen.

Aus der DE 19922778 A1 ist es hierzu bekannt, in den Heizkreis einen im Spiegel sichtbaren Heizungsindikator in Form einer LED vorzusehen. Auf diese weise wird der Betrieb der Spiegelheizung optisch angezeigt. Nachteilig hierbei ist, dass die LED in den Heizkreis eingebaut werden muß. Aufgrund der unterschiedlichen Heizströme bei Verwendung von PTC-Elementen als Heizeinrichtung führt dies zu stark unterschiedlichen Belastungen der LED bzw. zu unterschiedlichen Helligkeiten. Darüberhinaus zeigt diese LED nicht die Wirksamkeit der Spiegelheizung an, sondern lediglich deren Betrieb. Bei einem Kurzschluß in dem Flächenheizelement leuchtet die LED, obwohl die Funktionsfähigkeit der Spiegelheizung nur noch unzureichend gegeben ist. Darüberhinaus ist die Nachrüstung bestehender Spiegelsysteme schwierig.

Die DE 199 21 880 A1 offenbart einen beheizbaren Außenspiegel nach dem Oberbegriff des Anspruchs 1, bei dem eine Anzeigeelement, welches bei Überschreitung einer bestimmten Mindesttemperatur die Farbe oder Transmissivität ändert, auf der Spiegeloberfläche angeordnet ist. Diese Stelle ist aufgrund der idealen Wärmeleitung und leichten Nachrüstbarkeit auch die scheinbar geeignetste.

Nachteilig verkleinert jedoch das Anzeigelement in der DE 199 21 880 A1 das Sichtfeld des Spiegels. Zudem ist die Anordnung anfällig für Windkräfte, Außenbedingungen, Vibrationen und ähnliche nachteilige Einflüsse.

Ausgehend von der DE 199 21 880 A1 ist es daher Aufgabe der vorliegenden Erfindung, einen beheizbarern Außenspiegel mit einem Heizungsindikator, insbesondere einen beheizbaren Rückspiegel für Kfz zu schaffen, der das Sichtfeld des Spiegels nicht verkleinert. Weiter ist es Aufgabe der vorliegenden Erfindung eine Spiegelscheibe für einen solchen beheizbaren Außenspiegel anzugeben.

Zur Lösung dieser Aufgaben ist ein Außenspiegel nach dem Oberberiff des Anspruchs 1 bzw. eine Spiegelscheibe nach dem Oberbegriff des Anspruchs 7 durch die kennzeichnenden Merkmale des Anspruch 1 bzw. 10 weitergebildet.

Dadurch, dass der Heizungsindikator ein thermochromes Material aufweist, wird die Temperatur der Spiegeloberfläche, d. h. die Wirkung der Spiegelheizung angezeigt. Das thermochrome Material reagiert auf die Temperaturänderung durch Farbumschlag oder durch Änderung der Transmissivität. Thermochrome Materialien, die auf Temperaturänderung durch Farbumschlag reagieren, sind beispielsweise folienartigen Thermometerstreifen für Aquarien bekannt. Falls thermochrome Materialien eingesetzt werden, die auf Temperaturänderung mit einer Änderung ihrer Transmissivität reagieren, ist vorteilhaft hinter bzw. unter dem thermochromen Material eine auffallende Markierung, z. B. in Form einer Neonfarbfläche vorgesehen, die bei höherer Temperatur der Spiegeloberfläche unter dem thermochromen Material sichtbar wird. Als thermochromes Material können thermochrome Folien, thermochrome Kunststoffe und thermochrome Gels verwendet werden. Auch thermochrome Farben oder Lacke lassen sich verwenden, die bei Temperaturänderung mit einer Änderung ihrer Farbe reagieren.

Durch die Anordnung des Heizungsindikators neben oder auf der Rückseite bzw. hinter der Spiegelscheibe bleibt das Sichtfeld des Spiegels nahezu unverändert. Zudem erlaubt die Anordnung neben oder hinter der Spiegelscheibe eine geschütztere Platzierung des Indikators bezüglich Windkräften, Außenbedingungen und Vibrationen.

Gemäß einer vorteilhaften Ausgestaltung der Erfindung besteht das thermochrome Material aus einer thermochromen Folie. Derartige Folien lassen sich ohne Probleme an oder neben einer Spigelscheibe befestigen.

Gemäß einer weiteren vorteilhaften Ausgestaltung der Erfindung wird zur Verbesserung der Erkennbarkeit des optischen Heizungsindikator eine optische Strukturierung, z. B in Form von kleinen Prismen oder mit einer Fresnellinsenstruktur vorgesehen.

Diese optische Strukturierung läßt sich insbesondere auch in optischen Heizungsindikatoren in Form von Elementen aus thermochromen Kunststoff verwirklichen. D. h. die optische Strukturierung ist in das thermochrome Material integriert.

Die übrigen Unteransprüche beziehen sich auf vorteilhafte Ausgestaltungen der Erfindung.

Weitere Einzelheiten, Aspekte und Vorteile der vorliegenden Erfindung ergeben sich aus der nachfolgend als rein illustrativ und nicht einschränkend zu verstehenden Beschreibung einer Ausführungsform anhand der Zeichnung.

Es zeigt:
- Fig. 1: eine erste Ausführungsform der Erfindung;
- Fig. 2: die erste Ausführungsform im Querschnitt;
- Fig. 3: eine zweite Ausführungsform der Erfindung;
- Fig. 4: eine dritte Ausführungsform der Erfindung;

Figuren 5a und 5b eine sechste Ausführungsform der Erfindung.

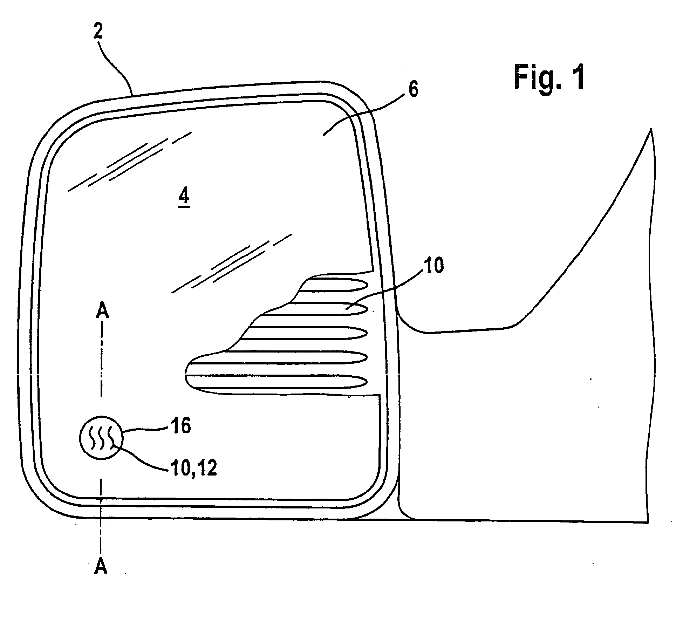

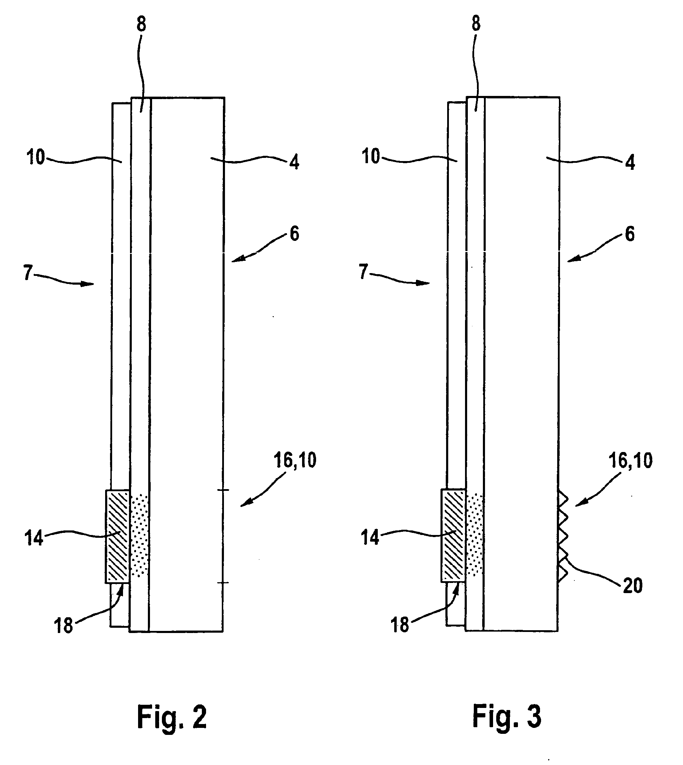

Figur 1 zeigt eine erste beispielhafte Ausführungsform der Erfindung in Form eines beheizbaren Außenrückspiegels für Kraftfahrzeuge. Der beheizbare Rückspiegel umfaßt eine Spiegelhalterung oder ein Spiegelgehäuse 2 mit einer Spiegelscheibe 4, die eine Vorder- oder Außenseite 6 und eine Rückseite 7 umfaßt. Die Vorderseite 6 ist nach außen gewandt und liegt im Blickfeld eines Fahrers. Wie insbesondere aus der Schnittdarstellung in Fig. 2 zu ersehen ist, umfaßt die Spiegelscheibe 4 eine auf der Rückseite 7 aufgebrachte Spiegelschicht 8. Auf der Spiegelschicht 8 ist wiederum eine elektrische Heizeinrichtung in Form eines Flächenheizelements 10 angeordnet.

In einer Ausnehmung 18 in dem Flächenheizelement 10 auf der Spiegelschicht 8 ist ein Heizungsindikator 12 in Form einer thermochromen Folie 14 angeordnet ist.

Die thermochrome Folie 14 reagiert auf Temperaturänderung mit Farbänderung. Ist die Spiegelheizung 10 in Betrieb, erhöht sich die Temperatur der Spiegelscheibe 4, was zu einem Farbumschlag der thermochromen Folie 14 und damit zu einer optischen Anzeige der Funktion der Spiegelheizung 8 führt.

Alternativ kann auch eine thermochrome Folie 14 verwendet werden, die auf Temperaturänderung mit einer Änderung der Transmissivität reagiert. Ist die Heizeinrichtung 8 in Funktion erhöht sich die Temperatur und die thermochrome Folie 14 wird durchsichtig und ist kaum noch zu erkennen. Ist die Heizeinrichtung 10 nicht in Betrieb ist die thermochrome Folie 14 als schwarze Fläche hinter der Spiegelscheibe 4 gut zu erkennen.

Damit der Farbumschlag von der Vorderseite 6 der Spiegelscheibe 4 auf der Indikatorfläche 16 sichtbar ist, ist hierzu die Spiegelschicht 6 in den Bereich auf dem die thermochrome Folie 14 aufgebracht ist, entfernt oder zumindest geschwächt.

Fig. 2 zeigt die Ausführungsform der Erfindung in einer Querschnitts-Darstellung.

Fig. 3 zeigt eine zweite Ausführungsform der Erfindung, die sich von der Ausführungsform nach Fig. 2 dadurch unterscheidet, daß zusätzlich noch auf der Vorderseite 6 der Spiegelscheibe 4 im Bereich der Indikatorfläche 16 eine optische Oberflächenstruktur 20 in Form von kleinen Prismen vorgesehen ist. Durch die Prismen 20 wird die Erkennbarkeit des Heizungsindikators 12 verbessert.

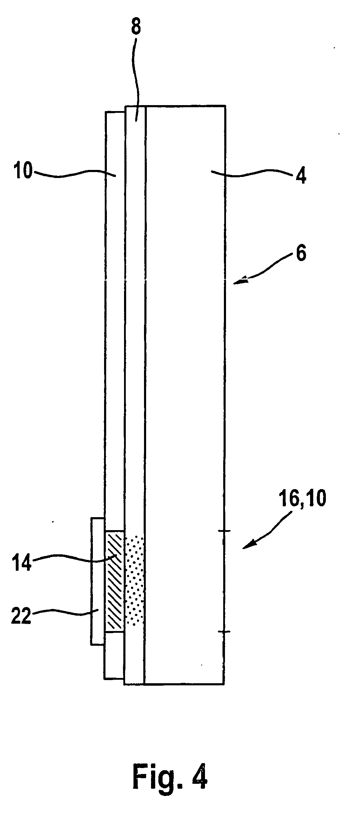

Fig. 4 zeigt schließlich eine dritte Ausführungsform der Erfindung, die in ihrem grundsätzlichen Aufbau der ersten Ausführungsform nach Fig. 2 entspricht, jedoch wird als Heizungsindikator 12 eine thermochrome Folie 14 verwendet, die nicht durch Farbumschlag sondern durch Änderungen der Transmisivität auf Themperaturänderungen reagiert. Hinter bzw. über der thermochronen Folie 14 mit sich ändernder Transmisivität ist ein neonfarbiger Markierungsstreifen 22 angeordnet, der von vorne durch die Spiegelscheibe 4 sichtbar wird, wenn die thermochrome Folie 14 ihre Transmisivität aufgrund der Themeraturänderung ändert.

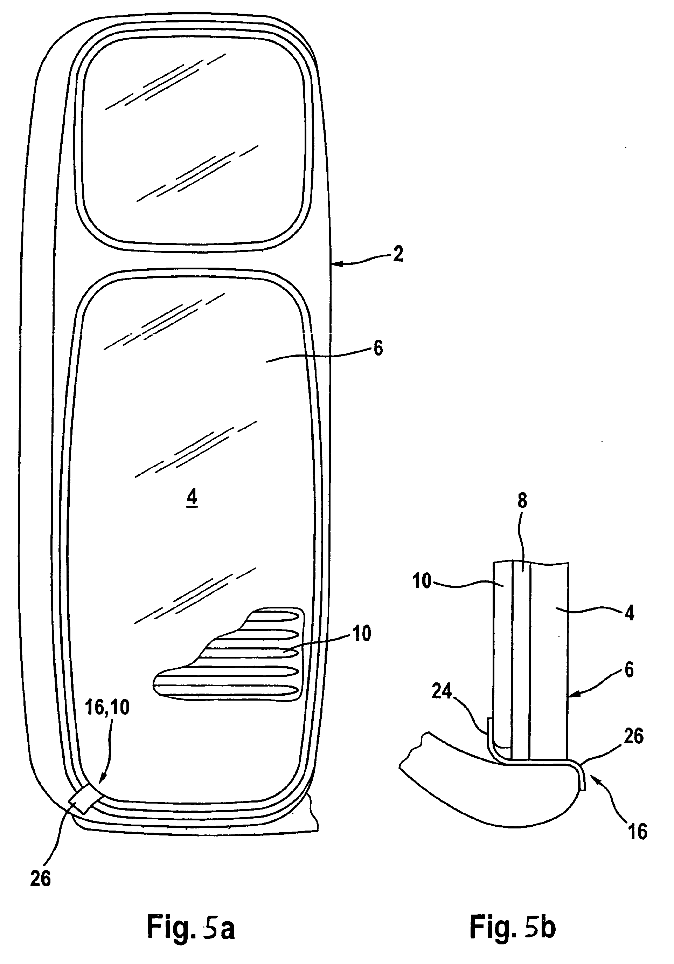

Figuren 5a und 5b zeigen eine vierte Ausführungform der Erfindung gemäß der ersten Alternative des Anspruchs 1, bei der ein Streifen 24 aus thermochromer Folie die freie Rückseite des Flächenheizelements 10 kontaktiert und zwischen Spiegelgehäuse und Kante der Spiegelscheibe 4 nach außen zum von vorne sichtbaren Bereich des Spiegelgehäuses geführt wird, so dass ein Teil 26 des thermochromen Streifens 24 von vorne als sichtbar ist und als Indikatorfläche 16 wirkt. In dem Bereich, in dem der thermochtrome Streifen 24 nicht sichtbar ist, kann alternativ auch ein gut wärme leitendes Material verwendet werden. Vorteilhaft bei der sechtsten Ausführungsform ist, dass Reif, Eis oder Kondenswasser auf der Vorderseite 6 der Spiegelscheibe 4 die Indikatorfläche 16 bzw. den Teil 26 des thermochromen Streifens 24 nicht abdeckt.

In den Ausführungsformen gemäß den Figuren 1 bis 5 sind jeweils Hinterflächenspiegel gezeigt. Anstelle dieser Hinterflächenspiegel lassen sich auch Vorderflächenspiegel einsetzen, bei denen die Spiegelschicht auf der Vorderseite der Spiegelscheibe angeordnet ist. Ebenfalls können in den Ausführungsformen nach den Figuren 1 bis 5 anstelle der thermochromen Folie 14 Element aus thermochromen Kunststoff mit und ohne optische Strukturierung verwendet werden.

## Patentansprüche

1. Beheizbarer Außenspiegel, insbesondere beheizbarer Rückspiegel für Kraftfahrzeuge, mit einer Spiegelhalterung (2), wenigstens einer Spiegelscheibe (4) mit einer Spiegelschicht (8), einer der wenigstens einen Spiegelscheibe (4) zugeordneten Heizeinrichtung (10) und einem Heizungsindikator (12), der den Betrieb der Heizeinrichtung (10) optisch anzeigt, wobei der optische Heizungsindikator (12) ein thermochromes Material (14) aufweist,
das auf Temperaturveränderung mit Farbumschlag oder mit einer Änderung des Transmissvität reagiert und das in wärmeleitendem Kontakt mit der Spiegelscheibe (4) und/oder der Heizeinrichtung (10) angeordnet ist, **dadurch gekennzeichnet, dass**
der Heizungsindikator (12, 26) neben der Spiegelscheibe (4) angeordnet ist oder
der Heizungsindikator (12) auf der Rückseite (7) oder hinter der Spiegelscheibe (4) angeordnet ist und dass die Spiegelschicht (8) im Bereich unter dem Heizungsindikator zumindest teilweise entfernt, so dass die Vorderseite (6) der Spiegelscheibe (4) an dieser Stelle als Indikatorfläche (16) wirkt.

2. Außenspiegel nach einem der vorhergehenden Ansprüche, **dadurch gekennzeichnet, dass** der Heizungsindikator (12) eine Stück thermochromer Folie (14, 24) ist.

3. Außenspiegel nach Anspruch 2, **dadurch gekennzeichnet,** die thermochrome Folie (14) auf der Rückseite (7) der Spiegelscheibe (4) aufgeklebt ist.

4. Außenspiegel nach Anspruch 3, **dadurch gekennzeichnet, dass** die Indikatorfläche (16) oder die thermochrome Folie (14, 24) eine das optische Aussehen beeinflussende Strukturierung (20) aufweist.

5. Außenspiegel nach Anspruch 4, **dadurch gekennzeichnet, dass** die Strukturierung eine Prismenstruktur (20) ist.

6. Außenspiegel nach einem der vorhergehenden Ansprüche, **dadurch gekennzeichnet, dass** das thermochrome Material (14) auf Temperaturänderung mit einer Änderung der Transmissivität reagiert und dass in Aufsicht auf die Spiegelscheibe (4) hinter dem thermochromen Material (14) eine farbige Markierung (22) angeordnet ist.

7. Spiegelscheibe,insbesondere für einen beheizbaren Außenspiegel nach einem der vorhergehenden Ansprüche, mit einer Vorderseite (6), einer Rückseite (7) und einer auf der Rückseite (7) aufgebrachten Spiegelschicht (8), mit einen optischen Heizungsindikator (12), der thermochromes Material (14) aufweist, **dadurch gekennzeichnet, dass** das thermochrome Material eine thermochrome Folie (14) ist, die auf der Rückseitseite (7) der Spiegelscheibe (4) angeordnet ist und dass die Spiegelschicht (8) im Bereich unter dem Heizungsindikator (10) zumindest teilweise entfernt, so dass die Vorderseite (6) der Spiegelscheibe (4) an dieser Stelle als Indikatorfläche (16) wirkt.

8. Spiegelscheibe nach Anspruch 7, **dadurch gekennzeichnet, dass** die thermochrome Folie (14) auf Temperaturänderung mit einer Änderung der Transmissivität reagiert und dass in Aufsicht auf die Spiegelscheibe (4) hinter der thermochromen Folie (14) eine farbige Markierung (22) angeordnet ist.

9. Spiegelscheibe nach Anspruch 7, **dadurch gekennzeichnet, dass** der optische Heizungsindikator (10) ein Element aus thermochromen Kunststoff ist.

10. Spiegelscheibe nach Anspruch 9, **dadurch gekennzeichnet, dass** das Element (28) aus thermochromen Kunststoff eine optische Strukturierung aufweist.

## Claims

1. Heatable external mirror, in particular a heatable rearview mirror for motor vehicles, comprising a mirror housing (2), at least one mirror pane (4) with a reflective layer (8), a heating means (10) associated with the at least one mirror pane (4) and a heating indicator (12), which provides a visual indication when the heating means (10) is in operation, the visual heating indicator (12) being made from a thermochromic material (14) which reacts to changes in temperature by changing colour or by a change in transmissivity and is arranged in heat-conducting contact with the mirror pane (4) and/or the heating means (10), **characterised in that** the heating indicator (12, 26) is arranged adjacent to the mirror pane (4) or the heating indicator (12) is arranged on the back of (7) or behind the mirror pane (4) and **in that** the reflective layer (8) is removed at least in part in the region under the heating indicator, so that the front (6) of the mirror pane (4) acts as the indicator surface (16) at this point.

2. External mirror according to any one of the preceding claims, **characterised in that** the heating indicator (12) is a portion of thermochromic film (14,24).

3. External mirror according to claim 2, **characterised in that** the thermochromic film (14) is attached to the back (7) of the mirror pane (4) by adhesive.

4. External mirror according to claim 3, **characterised in that** the indicator surface (16) or the thermochromic film (14, 24) has structuring (20) that influences the visual appearance.

5. External mirror according to claim 4, **characterised in that** the structuring is a prism structure (20).

6. External mirror according to any one of the preceding claims, **characterised in that** the thermochromic material (14) reacts to changes in temperature by a change in transmissivity and **in that** a coloured marker (22) is arranged behind the thermochromic material (14) viewed from above the mirror pane (4).

7. Mirror pane, in particular for a heatable external mirror according to any one of the preceding claims, having a front (6), a back (7), and a reflective layer (8) applied on the back (7), having a visual heating indicator (12) which is made from thermochromic material (14), **characterised in that** the thermochromic material is a thermochromic film (14), which is arranged on the back (7) of the mirror pane (4) and **in that** the reflective layer (8) is removed at least in part in the region under the heating indicator (10) so that the front (6) of the mirror pane (4) acts as the indicator surface (16) at this point.

8. Mirror pane according to claim 7, **characterised in that** the thermochromic film (14) reacts to changes in temperature by a change in transmissivity and that a coloured marker (22) is arranged behind the thermochromic film (14) when viewed from above the mirror pane (4).

9. Mirror pane according to claim 7, **characterised in that** the visual heating indicator (10) is an element made from thermochromic plastics material.

10. Mirror pane according to claim 9, **characterised in that** the element (28) made from thermochromic plastics material comprises visual structuring.

## Revendications

1. Rétroviseur extérieur pouvant être chauffé, en particulier un rétroviseur pouvant être chauffé pour des véhicules automobiles, avec un porte-miroir (2), au moins une glace (4) de miroir avec une couche (8) de miroir, un dispositif de chauffage associé à la au moins une glace (4) de miroir et un indicateur (12) de chauffage, qui affiche de manière optique le fonctionnement du dispositif (10) de chauffage,
l'indicateur (12) optique de chauffage présente un matériau (14) thermochrome,
qui réagit au changement de température par un changement de couleur ou par une modification de la transmissivité et qui est disposé en contact thermoconducteur avec la glace (4) de miroir et/ou avec le dispositif (10) de chauffage,
**caractérisé en ce que**
l'indicateur (12, 26) de chauffage est disposé à proximité de la glace (4) de miroir ou bien l'indicateur (12) de chauffage est disposé sur la face (7) arrière ou bien derrière la glace (4) de miroir et **en ce que** la couche (8) de miroir est éloignée dans la région en dessous de l'indicateur de chauffage au moins de manière partielle de manière telle que la face (6) avant de la glace(4) de miroir agisse à cet endroit en tant que surface (16) d'indication.

2. Rétroviseur extérieur selon l'une quelconque des revendications précédentes, **caractérisé en ce que** l'indicateur (12) de chauffage est une partie de feuille (14, 24) thermochrome.

3. Rétroviseur extérieur selon la revendication 2, **caractérisé en ce que** la feuille (14) thermochrome est collée sur la face (7) arrière de la glace (4) de miroir.

4. Rétroviseur extérieur selon la revendication 3, **caractérisé en ce que** la surface (16) d'indication ou bien la feuille (14, 24) thermochrome présente une structure (20) qui influence l'apparence optique.

5. Rétroviseur extérieur selon la revendication 4, **caractérisé en ce que** la structure est une structure (20) à prismes.

6. Rétroviseur extérieur selon l'une quelconque des revendications précédentes, **caractérisé en ce que** le matériau (14) thermochrome réagit au changement de température par une modification de la transmissivité et **en ce qu'**une marque (22) de couleur est disposée sur la glace (4) de miroir derrière le matériau (14) thermochrome lorsqu'on l'observe du dessus.

7. Glace de miroir, en particulier pour un rétroviseur extérieur pouvant être chauffé selon l'une quelconque des revendications précédentes, avec une face (6) avant, une face (7) arrière et une couche (8) de miroir appliquée sur la face (7) arrière, avec un indicateur (12) optique de chauffage, qui présente un matériau (14) thermochrome, **caractérisée en ce que** le matériau thermochrome est une feuille (14) thermochrome qui est disposée sur la face (7) arrière de la glace (4) de miroir et **en ce que** la couche (8) de miroir est éloignée dans la région en dessous de l'indicateur (10) de chauffage au moins de manière partielle, de manière telle que la face (6) avant de la glace(4) de miroir agisse à cet endroit en tant que surface (16) d'indication.

8. Glace de miroir selon la revendication 7, **caractérisée en ce que** la feuille (14) thermochrome réagit à un changement de température par une modification de la transmissivité et **en ce qu'**une marque (22) de couleur est disposée sur la glace (4) de miroir derrière la feuille (14) thermochrome lorsqu'on l'observe du dessus.

9. Glace de miroir selon la revendication 7, **caractérisée en ce que** l'indicateur (10) optique de chauffage est un élément fabriqué à partir d'une matière plastique thermochrome.

10. Glace de miroir selon la revendication 9, **caractérisée en ce que** l'élément (28) fabriqué à partir de matière plastique thermochrome présente une structure optique.
